Europäisches Patentamt

European Patent Office

Office européen des brevets

(11) Publication number: **0 164 468**
A2

# (12) EUROPEAN PATENT APPLICATION

(21) Application number: 84305401.6

(22) Date of filing: 08.08.84

(51) Int. Cl.⁴: **B 01 D 13/04**
C 08 J 7/06
//A61M1/16

(30) Priority: 15.06.84 JP 123405/84

(43) Date of publication of application:
18.12.85 Bulletin 85/51

(84) Designated Contracting States:
DE FR GB IT NL SE

(71) Applicant: MITSUBISHI RAYON CO. LTD.
3-19, Kyobashi 2-chome Chuo-Ku
Tokyo 104(JP)

(72) Inventor: Kamo, Jun
2-6-405, Kurokawa-3-chome
Otake-shi(JP)

(74) Representative: Bannerman, David Gardner et al,
Withers & Rogers 4 Dyer's Buildings Holborn
London, EC1N 2JT(GB)

(54) Porous membrane.

(57) A microporous membrane having a stable hydrophilicity and an excellent safety which is a hydrophobic microporous membrane having a porosity ranging from 20% by volume to 90% by volume, wherein at least a part of the pore surface of said microporous membrane has a layer hydrophilized with a complex lipid.

EP 0 164 468 A2

POROUS MEMBRANE

TECHNICAL FIELD

The present invention relates to a hydrophilized microporous membrane, and more particularly to a hydrophilized microporous membrane produced by tratment with a complix lipid.

PRIOR ART

Hydrophobic microporous membranes are characterized by their excellency in (1) chemical resistance, (2) resistance to bacteria and (3) biocompatibility, and they have become widely used in the field of industry as a separating membrane for various water treatment, as well as in the field of medical therapy as a plasma separator or a membrane type artificial lung. In some of these uses they are used for filtering or separating water or aqueous solution, the hydrophobic microporous membranes must be hydrophilized by some means.

A few means for the hydrophilizing treatment have so far been proposed. For example, the treatment by means of corona discharge and the treatment with an oxidative chemical agent have been tentatively employed hitherto. However, the treatment by corona discharge is disadvantageous in that it remarkably changes the pore structure of the membrane and it is unable to hydrophilize the membrane permanently. On the other hand, the hydrophilizing treatment by the use of oxidative chemical agent is unsatisfactory in that the chemical agent greatly injures the substrate of the microporous membrane and the chemical agent which has reached the inner part of the membrane is difficult to remove.

At the present stage, the most reliable method to hydrophilize the hydrophobic microporous membrane is to fill the pores with a liquid soluble in water and having a low surface tension, such as ethanol, and thereafter to replace said liquid with water. According to this method, however, the hydrophilicity of the membrane is lost if the water filled in the pores is eliminated, and the same hydrophilizing treatment must be repeated before use. Therefore, a microporous membrane hydrophilized by this method has to be handled with a very troublesome care.

OBJECT OF THE INVENTION

In view of the above mentioned present status of things, the inventors have conducted studies with the aim of discovering a simpler method for hydrophilizing treatment capable of giving a hydrophilized microporous membrane which is characterized in that, even if the water filled in the pores of the membrane has once been lost, the pores can be refilled with water quite easily and which exhibits no toxicity upon human body when used as a material for medical supplies. As the result of the studies, the present invention has been accomplished.

CONCRETE CONSTRUCTION OF THE INVENTION

The gist of the invention consists in a hydrophobic microporous membrane of which porosity is in the range from 20% by volume to 90% by volume and which has a layer hydrophilized with a complex lipid on at least a part of the pore surface of the microporous membrane.

As the materials of hydrophobic microporous membrane usable in practising the invention, there are included polyolefins such as polyethylene, polypropylene, poly-4-methylpentene-1 and the like; and poly-fluroolefins such as polyvinylidene fluoride, polytetrafluoroethylene, propylene hexafluoride-ethylene tetra-fluoride copolymer, copolymers of monomers constituting these fluoroolefin polymers and poly olefin, and the like.

For the production of the microporous membrane, various production precesses such as stretching melt formed precursor hollow fiber or film, extracting second component from the precursor melt formed from the blended material of membrane forming material and of second component, coagulating a polymer solution in a non-solvent for the polymer, and the like can be employed.

Preferably, the microporous membrane has a porosity ranging from 20% by volume to 90% by volume. A porosity lower than 20% by volume is undesirable, because a microporous membrane of such a low porosity has low permeability when the membrane is hydrophilized. On the other hand, a porosity higher than 90% by volume is also undesirable, because a microporous membrane having such a high porosity is inferior in the strength of membrane itself.

The complex lipids usable for producing the hydrophilized microporous membrane of the invention include a variety of natural and synthetic complex lipids such as lecithin, phosphatidyl-ethanolamine, sphingomyelin, and the like. Of these complex lipids, egg yolk lecithin and soybean lecithin are particularly preferable.

In hydrophilizing the microporous membrane, a hydrophobic microporous membrane is treated with a solution of a complex lipid in water or organic solvent, whereby a layer hydrophilized with the complex lipid is formed in the microporous membrane. The concentration of complex lipid in the complex lipid solution is preferable to be 0.5% by weight or higher. As the solvent for the complex lipid, ethanol and aqueous ethanol solution (particularly, a solution having ethanol concentration of 50% or more) are preferable, from the viewpoint of easiness of the hydrophilizing treatment and safety to living body. It is not always necessary to completely coat the micropore surface of porous membrane with the layer of complex lipid, but a state that at least 10% of the pore surface is coated with it is enough for the invention. However, coating 30% or more of the pore surface with complex lipid is preferable, and further, coating 50% or more of the same with complex lipid is more preferable. It is needless to say that both surfaces of the membrane may also be coated with the complex lipid layer. As for the amount of the complex lipid coating, an amount not smaller than 0.5% by weight based on the weight of membrane is enough to exhibit a hydrophilicity, and an amount ranging from 1% by weight to 70% by weight is preferable. Since too large an amount of complex lipid coating decreases the water flux of the membrane, the amount of complex lipid coating is preferably not larger than 100% by weight based on the weight of membrane. The combined structure composed of a complex lipid and a polymeric substrate of microprous membrane is quite excellent in hydrophilicity, so that water can readily be introduced into the interior of porous membrane by merely passing water through the porous membrane which has been treated with a complex lipid solution and then dried. The form of the porous membrane may be any of hollow fiber, tube and film.

EFFECT OF THE INVENTION

As compared with the hitherto developed hydrophilized membranes, the hydrophilic microporous membrane of the invention has a much stabler hydrophilicity so that, even if the water filled in the pores of microporous membrane is once released, water can easily penetrate again into the pores to refill them.

Further, since many of the complex lipids are originated from living bodies and therefore have a very high safety to the living bodies, the microporous membrane of the invention keeps a very high safety when put to medical uses such as artificial kidney, plasma separator and the like. Further, its utilizability in the industrial field is also very high.

Referring to the following examples, the invention will be illustrated in more detail.


Example 1

A microporous membrane made of hollow polyethylene fibers (inner diameter of hollow fiber: 300 μ; thickness of membrane: 70 μ; porosity 72%) was dipped for 2 minutes in a 2% (by weight) ethanolic solution of egg yolk lecithin (PL-100, manufactured by Q.P. K. K.), after which it was dried under reduced pressure at room temperature for 48 hours. It was confirmed that the egg yolk lecithin was deposited on the hollow polyethylene fiber membrane in an amount of 11% by weight. This means that about 90% or more of the pore surface of the hollow fiber membrane was coated with egg yolk lecithin. A module having a membrane area of 200 $cm^2$ was prepared from this hollow fiber membrane, and distilled water was passed through the membrane under a pressure of 30 mm Hg. Thus, the water permeation rate was found to be 5.2 liters/$m^2$.hr.mm Hg.

Next, the membrane was dried overnight under an air pressure of 0.5 kg/$cm^2$ and the water present in the hollow fiber membrane was removed thoroughly, after which distilled water was passed therethrough under a pressure of 30 mm Hg. The water permeation rate was found to be 5.2 liters/m$^2$.hr.mm Hg.


Comparative Example 1

Using the same hollow fiber membrane as in Example 1, a module having a membrane area of 200 cm$^2$ was prepared. After passing ethanol through the membrane at a flow rate of 50 ml/minute, the ethanol was washed away and replaced with distilled water for the sake of a hydrophilizing treatment. Then, distilled water was passed through the membrane under a pressure of 30 mm Hg while taking care to prevent the inclusion of air bubbles into the membrane. Thus, the water permeation rate was found to be 5.3 liters/m$^2$.hr.mm Hg.

Next, the membrane was dried overnight under an air pressure of 0.5 kg/cm$^2$ and the water present in the hollow fiber membrane was removed thoroughly, after which distilled water was passed therethrough. However, water could not be filtered even if the pressure was elevated to 2 kg/cm$^2$.


Examples 2-6

Using a microporous membrane made of hollow polyethylene fibers (inner diameter of the hollow fiber: 280 μ; thickness of membrane: 58 μ; porosity: 65%), a module having a membrane area of 50 cm$^2$ was prepared. Through the module, the complex lipid solution shown in Table 1 was passed under an external pressure of 0.2 kg/cm$^2$ for one minute, after which the module was dried at room temperature for 24 hours. Subsequently, distilled water was passed through the module under pressure of 100 mm Hg. The water permeation rate was as shown in Table 1.

Comparative Example 2

The module prepared in the same manner as in Example 2 which has not yet been treated with the complex lipid was treated with ethanol by passing ethanol therethrough and then the ethanol was washed away and replaced with distilled water while taking care to prevent the inclusion of air bubbles into the hollow fibers. Subsequently, the water permeation rate was measured under a pressure of 100 mm Hg. The water permeation rate was found to be 2.3 liters/$m^2$.hr.mm Hg.

Then, the membrane was dried overnight under an air pressure of 0.5 kg/$cm^2$ and the water present in the hollow fiber membrane was removed thoroughly, and then distilled water was passed through the membrane. However, water could not be permeated even if the pressure was elevated to 2 kg/$cm^2$.

Table 1

| Example No. | Complex lipid | Concentration of complex lipid (% by wt.) | Solvent | Water permeation rate (liters/$m^2$.hr.mm Hg) | Amount of deposited complex lipid (g/g) |
|---|---|---|---|---|---|
| 2 | Egg yolk lecithin | 1 | Ethanol | 2.2 | 0.05 |
| 3 | ditto | 3 | ditto | 2.3 | 0.13 |
| 4 | ditto | 3 | Chloroform | 2.4 | 0.12 |
| 5 | Soybean lecithin | 1 | Ethanol | 2.1 | 0.04 |
| 6 | Egg yolk kephalin (Phosphatidyl-ethanolamine) | 1 | ditto | 2.0 | 0.05 |

0164468

Examples 7-9 and Comparative Example 3

The hydrophobic porous membranes shown in Table 2 were dipped for 5 minutes in a 1.5% (by weight) ethanolic solution of egg yolk lecithin and then dried under reduced pressure at a temperature of 35$^{O}$C. From the change in the weight of the hollow fiber membrane before and after the treatment, the amount of deposited lecithin was determined. The results were as shown in Table 2. Further, modules having a membrane area of 100 cm$^2$ were prepared from the treated membranes thus obtained, and distilled water was passed through the modules under a pressure of 250 mm Hg. The water permeation rates were found to be as shown in Table 2.

Table 2

| Example No. | Elementary material of hydrophobic membrane | Inner diameter ($\mu$) | Thickness of membrane ($\mu$) | Porosity (%) | Amount of deposited lecithin (g/g) | Water permeation rate (liters/$m^2$.hr.mm Hg) |
|---|---|---|---|---|---|---|
| 7 | Polyethylene | 250 | 50 | 60 | 0.06 | 0.83 |
| 8 | Polypropylene | 200 | 25 | 50 | 0.018 | 0.20 |
| 9 | Teflon *(Fluoropore FP-045) | (Flat membrane) | 80 | 68 | 0.11 | 6.5 |
| Comparative Example No. | | | | | | |
| 3 | Polypropylene | 180 | 20 | 15 | 0.001 | No water permeation at 250 mm Hg |

(Note) *  Trade Mark of Sumitomo Electric I.N.D. Lid.

0164468

**0164468**

WHAT IS CLAIMED IS:

1.      A microporous membrane which is a hydrophobic microporous membrane having a porosity ranging from 20% by volume to 90% by volume, wherein at least a part of the pore surface of said microporous membrane has a layer hydrophilized with a complex lipid.

2.      A microporous membrane according to Claim 1, wherein said hydrophobic microporous membrane is a polyolefin membrane or a fluorinated polyolefin membrane.

3.      A microporous membrane according to Claim 1 or 2, wherein said layer hydrophilized with a complex lipid is a layer of egg yolk lecithin or/and soybean lecithin.

4.      A microporous membrane according to Claim 1, wherein 10% or more, preferably 30% or more and more preferably 50% or more of the pore surface of the microporous membrane is coated with a complex lipid.

5.      A microporous membrane according to Claim 1, wherein the amount of complex lipid coating is in the range from 0.5% by weight to 100% by weight and preferably in the range from 1% by weight to 70% by weight, based on the weight of the microporous membrane.